# EUROPEAN PATENT APPLICATION

(11) **EP 4 790 321 A1**
(43) Date of publication of application: **12.08.2026**
(21) Application number: 25156083.5
(22) Date of filing: 05.02.2025
(51) Int. Cl.: F24C 14/00, A21B 3/04, F24C 15/32

(54) **AN OVEN AND A METHOD FOR OPERATING AN OVEN**

(71) Applicant: Electrolux Professional S.p.A., 33170 Pordenone (IT)
(72) Inventor: AGNOLET, Freddie, 33170 Pordenone (IT); D'ANDREA, Francesco Giuseppe, 33170 Pordenone (IT); BARALDO, Dino Willy, 33170 Pordenone (IT)
(74) Representative: AWA Sweden AB

(57) **Abstract**

An oven configured for operating in a food preparation mode and a washing mode is provided. The oven comprises an oven cavity, comprising a cooking chamber and a heating chamber, and a partition wall. The oven comprises an arrangement for conveying liquid within the oven cavity. The arrangement comprises a liquid supplying means configured to supply a first liquid and a second liquid to the oven cavity, a control unit configured to control a flow rate of the first liquid and the second liquid, an opening arranged in the partition wall and configured to be in fluid communication with the heating chamber, and a directing plate fixedly arranged adjacent the opening and configured to, based on the flow rate of the first liquid and second liquid, direct the first liquid and the second liquid towards at least one of the cooking chamber and the opening.

## Description

### TECHNICAL FIELD

The present disclosure generally relates to the technical field of ovens for cooking foodstuff, more specifically "professional" ovens, i.e. ovens used mainly in professional activities, like restaurants, canteens, hotels, etc. In particular, the present disclosure relates to an oven with an arrangement for conveying liquid, and a method thereof.

### BACKGROUND

Typically, professional ovens for cooking foodstuff comprise a housing or an oven cavity, typically made of steel, containing a cooking chamber wherein foodstuffs can be placed for being cooked. The cooking chamber is frequently provided with removable trays or racks, where food and/or pots or backing trays containing foodstuff can be placed. The oven is also provided with a heating device, e.g. an electric heater, or a gas heater, configured for heating the interior of the cooking chamber. Known ovens also comprise a partition wall separating the cooking chamber from a heating chamber containing the heating device, and, a centrifugal fan configured for circulating an airflow through the cooking chamber and the heating chamber. In some cases, ovens for cooking foodstuff are equipped with a steam generation system for producing steam for cooking. For example, water may be heated and vaporized by a heating device and generated steam may be supplied to the cooking chamber.

In known solutions, the cooking chamber needs to be cleaned regularly (e.g. washed, degreased, descaled) in order to ensure hygiene and to preserve its correct functioning. A manual cleaning is burdensome and requires much time. Some known ovens are provided with a cleaning system wherein a cleaning liquid, e.g., a solution of water and chemicals, is supplied within the cooking chamber to clean the internal surfaces of the cooking chamber. For example, in some known solutions the cleaning liquid is sprayed in a central region of the centrifugal fan via a pipe ending with a nozzle positioned within the cooking chamber and facing a central suction mouth of the partition wall. The cleaning liquid is sucked in by the fan, and then spread by the fan over the cooking chamber. This solution has however the drawback that the nozzle and the pipe disturb the air flux generated by the fan during a cooking process. Furthermore, solutions including cleaning liquid being sucked in by the fan may result in poor cleaning of the cooking chamber as only a small quantity of cleaning liquid manages to reach the cooking chamber. In some other known solutions, the cleaning liquid is sprayed directly in the cooking chamber, e.g., from a sprinkler in the upper wall of the cooking chamber. However, this leads to poor cleaning of the heating chamber.

### SUMMARY

In light of the above, it is desired to provide more efficient, thorough and optimal cleaning of the oven cavity. It is further desired to avoid disturbing or compromising with other functionalities of the oven such as functionalities during a cooking process. Specifically, there is a desire to be able to improve the cleaning of the cooking chamber as well as the heating chamber and to facilitate the cooking process of foodstuff and the functionality thereof.

These and other objects are achieved by means of an improved oven and a method for operating such an oven as defined in the appended independent claims. Other embodiments are defined by the dependent claims.

According to a first aspect of the present disclosure, an oven configured for operating in a food preparation mode and a washing mode is provided. The oven comprises an oven cavity comprising a cooking chamber and a heating chamber. The heating chamber comprises at least one heating element and a fan configured to circulate air in the oven cavity. The oven comprises a partition wall arranged to separate the cooking chamber from the heating chamber. The partition wall extends along a first axis between an upper wall of the cooking chamber and a bottom wall of the cooking chamber. The oven comprises an arrangement for conveying liquid within the oven cavity. The arrangement comprises a liquid supplying means configured to supply a first liquid and a second liquid to the oven cavity. The arrangement comprises a control unit connected to the liquid supplying means and configured to control a flow rate of the first liquid and the second liquid. The arrangement comprises an opening arranged in the partition wall and configured to be in fluid communication with the heating chamber. The arrangement comprises a directing plate fixedly arranged adjacent the opening. The directing plate is configured to, based on the flow rate of the first liquid and second liquid, direct the first liquid and the second liquid towards at least one of the cooking chamber and the opening.

According to a second aspect of the present disclosure, a method for operating an oven according to the first aspect of the present disclosure is provided. The method comprises activating, by the control unit, an operating mode of the oven, wherein the operating mode is the food preparation mode or the washing mode. The method comprises supplying, by the liquid supplying means, the first liquid and/or the second liquid to the oven cavity based on the activated operating mode. The method comprises controlling, by the control unit, the flow rate of the first liquid and/or the second liquid based on the activated operating mode. The method comprises directing, by the directing plate, the first liquid and/or the second liquid towards at least one of the cooking chamber and the opening, based on the flow rate of the first liquid and/or the second liquid.

The present disclosure relates to the idea of providing an oven and a method for operating an oven that may improve and facilitate cleaning or washing of the entire oven cavity, i.e., the cooking chamber and the heating chamber, within the field of ovens, more specifically professional ovens. The present disclosure also relates to the idea of providing an oven that may facilitate the cooking process of food stuff or food preparation. Thus, the present disclosure provides an improved oven with an arrangement for conveying liquid in order to operate in a food preparation mode and in a washing mode.

The food preparation mode of the oven may relate to a cooking process or preparation of foodstuff placed in the cooking chamber. The washing mode of the oven may relate to an automatic, or semi-automatic, washing or cleaning process of the oven cavity, e.g., the cooking chamber and the heating chamber. The oven cavity may be made of a metal, such as steal, and forms a type of housing in the oven. The cooking chamber and the heating chamber may form part of the oven cavity. The cooking chamber may be box shaped and may comprise six walls which constitutes the chamber. The cooking chamber may have an upper wall, a bottom wall and four side walls. Foodstuff to be cooked may be placed in the cooking chamber. The cooking chamber may be provided with removable trays or racks where food and/or pots or backing trays containing foodstuff can be placed. The heating chamber may comprise one or more heating elements. The at least one heating element may be configured for heating the internal of the cooking chamber. The at least one heating element may be, e.g., an electric heater or a gas heater. The fan of the heating chamber may be a centrifugal fan. The fan may be configured to circulate heated air through the cooking chamber and the heating chamber. The fan may be arranged in connection to the cooking chamber in order to circulate air within the cooking chamber.

The oven comprises a partition wall which may be arranged to divide the oven cavity into the heating chamber and the cooking chamber. Thus, the partition wall separates the cooking chamber from the heating chamber. The partition wall extends along a first axis between the upper wall of the cooking chamber and the bottom wall of the cooking chamber, and thus, the partition wall may form or constitute a side wall of the cooking chamber. Preferably, the partition wall may be oriented vertically, or substantially vertically, when the oven is in its operative position. Thus, when the oven is in its operative position, the first axis may align or be parallel with a vertical axis. It is to be understood that in the present application, "operative position" is defined as a position in which the oven is installed to be operable, and it lies in a horizontal, or substantial horizontal, plane such as the floor of a room, or the internal bottom wall of a piece of furniture in which the oven is built-in. The partition wall may be made of metal, such as steel. The partition wall may comprise a suction area facing a central region of the fan of the heating chamber. In this way, the suction area may allow for a passage of air and/or liquid between the cooking chamber and the heating chamber. The suction area may be provided with a grating, a grid or a net. The suction area may comprise of one or more holes perforated in the partition wall.

The first liquid and the second liquid may be delivered, conveyed or supplied to the oven cavity via the liquid supplying means. It is to be understood that the first liquid, and/or the second liquid, may for example be water or water containing, or mixed with, detergent, cleaning chemicals, or cleaning agents. The first liquid and the second liquid may be different liquids. It is to be understood that the liquid supplying means may supply the first liquid and the second liquid simultaneously or one at a time. Based on the activated operating mode of the oven, the first liquid and/or the second liquid is supplied to the oven cavity. The supply of the first liquid and the supply of the second liquid may be controlled independently of each other. The oven comprises a control unit. The control unit may be configured to control the flow of the first liquid and the second liquid in the liquid supplying means. It is to be understood that the control unit may control a first flow rate of the first liquid and a second flow rate of the second liquid independently of each other. The flow rate of the first liquid and the second liquid may be based on the activated operating mode. The control unit may be configured to control a liquid flow rate, and/or a liquid pressure, of the first liquid and the second liquid. The control unit may be arranged or placed at a suitable position within and/or in connection to the oven. The control unit may control the activation of an operating mode, i.e., the food preparation mode and the washing mode. The control unit may receive input from an operator of the oven, for example via a user interface. The input may comprise data related to the activation of one of the operating modes of the oven. For example, an operator may select to activate the washing mode of the oven. The input may comprise data related to a flow rate or the first liquid and/or a flow rate of the second liquid. The flow rate of the first liquid and/or the flow rate of the second liquid may be preset in the oven, for example stored in a memory or a data storage of the control unit or of the oven. Thus, the flow rate of the first liquid and the flow rate of the second liquid may be set by an operator or be preset in the oven.

The partition wall may comprise an opening configured to be in fluid communication with the heating chamber. In this way, a fluid, such as a liquid, e.g., the first liquid and the second liquid, may be led through the opening in the partition wall. For example, the first liquid and/or the second liquid supplied to the oven cavity may be conveyed via the opening to the heating chamber. Herein a first part being in "fluid communication" with a second part may mean, or describe, that a fluid may flow between the first part and the second part, directly or indirectly, such as via another intermediate part. The opening arranged in the partition wall and the directing plate may be arranged or placed in relation to each other. The directing plate may be fixedly arranged adjacent, in connection to, close to, or near the opening. The directing plate may be arranged in the cooking chamber. The directing plate may have a fixed position in the cooking chamber. The directing plate may be arranged such that it may direct a liquid, supplied from the liquid supplying means, towards the opening and/or towards the cooking chamber. In an example, the directing plate may be connected or fastened to the upper wall of the cooking chamber or to the partition wall. The directing plate may be configured to direct, deflect, convey, lead, and/or guide a liquid towards the opening and/or towards the cooking chamber. In an example, a flow of a liquid hitting the directing plate may be directed by the directing plate towards the opening and/or towards the cooking chamber. Depending on a flow rate of the liquid, the directing plate may direct the liquid towards the opening, towards the cooking chamber, or towards both the opening and the cooking chamber. Thus, the arrangement of the directing plate as well as the flow rate of the liquid may affect how the liquid is directed by the directing plate. It is to be understood that when referring to a liquid herein, it is meant the first liquid or the second liquid. It is to be understood that the directing plate may direct the first liquid and the second liquid simultaneously or one at a time.

There are a number of advantages associated with the oven according to the first aspect of the present disclosure. The arrangement for conveying liquid allows for conveying or distributing the first liquid and the second liquid in the cooking chamber and/or in the heating chamber of the oven cavity. The arrangement of the directing plate and the opening in the partition wall together with the controlling of a flow rate of the first liquid and/or a flow rate of the second liquid provides the possibility to direct the first liquid and/or the second liquid in two ways simultaneously or, alternatively, in one or the other way at a time. Thus, by controlling or regulating the flow rate of the first liquid and/or the flow rate of the second liquid, the arrangement for conveying liquid provides the possibility to convey the first liquid and/or the second liquid in different ways, depending of the application and/or the operating mode of the oven. With the arrangement for conveying liquid, there is provided an improved way to efficiently direct a liquid towards at least one of the cooking chamber and the opening, and thus, the heating chamber. This way of directing a liquid using the directing plate and the flow rate of the liquid may be utilized for different purposes related to the operating mode of the oven. Furthermore, the arrangement for conveying liquid may have a compact design within the oven cavity since it comprises few components. Thereby, the arrangement for conveying liquid may be space-efficient within the oven cavity. In this way, the arrangement for conveying liquid may not interfere with other functionality of the oven. It is to be understood that the advantages mentioned herein in relation to the oven according to the first aspect of the present disclosure also apply to the method according to the second aspect of the present disclosure.

According to some embodiments, in the food preparation mode, the control unit may be configured to control a first flow rate of the first liquid, and the directing plate may be configured to, based on the first flow rate, direct the first liquid towards the opening.

The food preparation mode may relate to an automatic cooking process for preparing foodstuff. The control unit may activate the food preparation mode in which foodstuff placed in the cooking chamber may be prepared or cooked. In the food preparation mode, the first liquid may be used. In the food preparation mode, the first liquid may be conveyed towards the heating chamber via the directing plate and the opening. The liquid supplying means may be configured to supply the first liquid to the oven cavity in the food preparation mode. The control unit may control the first flow rate of the first liquid. Based on the first flow rate, the directing plate may direct the supplied first liquid towards the opening in the partition wall. The opening is configured to be in fluid communication with the heating chamber, and thus, by directing the first liquid towards the opening, the flow of the first liquid may be conveyed towards the heating chamber. In an example, the first liquid may be water and the food preparation mode may involve a steam generation function. In the food preparation mode, the water supplied by the liquid supplying means may be directed by the directing plate towards the opening and the heating chamber, based on the first flow rate. The water may reach the at least one heating element and the fan such that steam is produced and distributed in the cooking chamber. The oven of the present disclosure may allow for a food preparation mode in which the first liquid may be controlled to have a first flow rate. By the arrangement for conveying liquid and based on the first flow rate, the first liquid may be conveyed towards the heating chamber via the opening. This may, for example, allow for a function of steam generation of the oven.

According to some embodiments, the first flow rate may be less than or equal to 0.5 dm³ per minute.

The first flow rate may be less than or equal to 0.5 litres per minute. In an example, the first flow rate may be less than or equal to 0.4 dm³ per minute and greater than or equal to 0.1 dm³ per minute. That is, if the first flow rate is denoted FR1, the example may be expressed as 0.1 dm³/minute ≤ FR1 ≤ 0.4 dm³/minute. Having a first flow rate of the first liquid that may be less than or equal to 0.5 dm³ per minute may be beneficial in order to direct the first liquid towards the opening by the directing plate. By this, it may be ensured that the first liquid may be directed by the directing plate and reach the heating chamber in the food preparation mode.

According to some embodiments, in the washing mode, the control unit may be configured to control a second flow rate of the second liquid, and the directing plate may be configured to, based on the second flow rate, direct the second liquid partly towards the opening and partly towards the cooking chamber.

The control unit may activate the washing mode of the oven in which the oven cavity may be cleaned or washed. In the washing mode, no foodstuff may be placed in the cooking chamber. In the washing mode, the second liquid may be used. In the washing mode, the second liquid may be conveyed towards the heating chamber and towards the cooking chamber via the directing plate. The liquid supplying means may be configured to supply the second liquid to the oven cavity in the washing mode. The control unit may control the second flow rate of the second liquid. Based on the second flow rate, the directing plate may direct the supplied second liquid partly towards the opening in the partition wall and partly towards the cooking chamber. The directing plate may direct the second liquid in two different ways based on the second flow rate, i.e., the flow of the second liquid may be split in two different ways creating two different flows. The opening is configured to be in fluid communication with the heating chamber, and thus, by directing the second liquid partly towards the opening, a part of the flow of the second liquid may be directed towards the heating chamber. In the washing mode, a part of the second liquid may reach and spread in the heating chamber. In the washing mode, a part of the flow of the second liquid may be directed towards, and/or spread into the cooking chamber. In the washing mode, the flow of the second liquid may thus be directed, and/or divided or split, into two different flows towards different parts of the oven cavity. In an example, the second liquid may comprise water mixed with a detergent, a cleaning agent and/or any chemical solution suitable for cleaning. The second liquid may thus be a cleaning liquid. In the washing mode, the cleaning liquid supplied by the liquid supplying means, may be directed by the directing plate partly towards the opening, and thus, the heating chamber, and partly towards the cooking chamber, based on the second flow rate. One part of the cleaning liquid may reach and spread in the heating chamber and another part of the cleaning liquid may spread into the cooking chamber. The part of the cleaning liquid directed towards the cooking chamber may be sprayed, scattered, sprinkled and/or spread into the cooking chamber. The directing plate may be formed such that, based on the second flow rate, the part of the cleaning liquid directed towards the cooking chamber may be sprayed over the cooking chamber. In an example, the washing mode may comprise an automatic, or semi-automatic, washing cycle of the oven cavity.

The oven of the present disclosure may allow for a washing mode in which the second liquid may be controlled to have a second flow rate. By the arrangement for conveying liquid and based on the second flow rate, the second liquid may be conveyed partly towards the heating chamber via the opening and partly towards the cooking chamber. The oven of the present disclosure may in this way allow for cleaning and/or rinsing of both the heating chamber and the cooking chamber. The oven of present disclosure may provide, in the washing mode, the possibility to direct the second liquid in two ways simultaneously based on the flow rate of the second liquid. This may facilitate and improve the cleaning and/or rinsing of the entire oven cavity, i.e., both the heating chamber and the cooking chamber. For example, the second liquid may be a cleaning liquid and the oven of the present disclosure may then ensure that cleaning liquid is properly spread or distributed in both the heating chamber and the cooking chamber during the washing mode.

According to some embodiments, the second flow rate may be greater than or equal to 10 dm³ per minute.

The second flow rate may be greater than or equal to 10 litres per minute. In an example, the second flow rate may be greater than or equal to 15 dm³ per minute and less than or equal to 25 dm³ per minute. That is, if the second flow rate is denoted FR2, the example may be expressed as 15 dm³/minute ≤ FR2 ≤ 25 dm³/minute. Having a second flow rate of the second liquid that may be greater than or equal to 10 dm³ per minute may be beneficial in order to direct the second liquid partly towards the opening and partly towards the cooking chamber by the directing plate. By this, it may be ensured that the second liquid may be directed by the directing plate and reach both the heating chamber and the cooking chamber in the washing mode.

According to some embodiments, the arrangement may comprise a channel configured to convey the first liquid and the second liquid from the opening towards the at least one heating element and/or the fan of the heating chamber.

The channel may be connected to the opening in the partition wall. The channel may be configured to lead or guide a liquid from the opening towards the heating chamber. The channel may convey a liquid from the opening towards, or into, a suction area of the fan. The channel may be connected to, or fastened to, the partition wall. The channel may be a conduit or a pipe. The channel may facilitate the conveying of a liquid from the opening towards the heating chamber, and/or the components of the heating chamber, such as the fan. In this way, depending on the operating mode of the oven, the first liquid and/or the second liquid may reach and spread in the heating chamber in a desired and proper way. Further, the channel is advantageous since it directs the flow of a liquid from the opening in a desired direction, increasing the ability to control or direct the flow of the liquid towards the heating chamber.

According to some embodiments, at least a part of the directing plate may extend into the cooking chamber at an inclination angle relative to the first axis. The inclination angle may be greater than or equal to 60 degrees and less than or equal to 90 degrees.

At least a part of the directing plate may have an inclination angle relative to the first axis. The inclination angle may be defined as an angle between the first axis and at least a part of the directing plate. The inclination angle of at least a part of the directing plate may facilitate the directing of the first liquid and/or second liquid. In the food preparation mode, the inclination angle of the directing plate may facilitate and/or ensure that the first liquid may be directed towards the opening in a desired way. In the washing mode, the inclination angle of the directing plate may facilitate and/or ensure that the second liquid may be directed partly towards the opening and partly towards the cooking chamber. Especially, in the washing mode, the inclination of at least a part of the directing plate may be beneficial in order to spread, or spray, the second liquid into, or over, the cooking chamber. The inclination angle of at least a part of the directing plate and the second flow rate may together provide a spray effect of the second liquid. By this, the efficiency of the oven of the present disclosure may be improved.

According to some embodiments, the liquid supplying means may comprise a nozzle arranged in the oven cavity and configured to supply the first liquid and the second liquid to the oven cavity in a first direction parallel to the first axis.

The liquid supplying means may comprise a nozzle in order to supply the first liquid and second liquid. The first liquid and the second liquid may be supplied to the oven cavity in the first direction from the nozzle. The first direction may be parallel to the first axis. The directing plate may be arranged, and/or formed, in relation to the first direction. By this, an angle of incidence of the flow of the first liquid and the second liquid relative to the directing plate may be known. By supplying the first liquid and the second liquid to the oven cavity in the first direction, the first liquid and the second liquid may be directed by the directing plate in an improved and more efficient way.

According to some embodiments, the nozzle may be arranged in the cooking chamber between the upper wall of the cooking chamber and the directing plate, and arranged along the first direction.

The nozzle may be connected or fastened to the upper wall of the cooking chamber, the partition wall, and/or a side wall of the cooking chamber. The nozzle may be arranged between the upper wall of the cooking chamber and the directing plate along a direction parallel to the first axis. The nozzle may be arranged along the first direction in order to supply the first liquid and the second liquid to the oven cavity and/or the cooking chamber along the first direction. The liquid supplying means and/or the nozzle may supply the first liquid and the second liquid to the cooking chamber, e.g., to a restricted or a specific area of the cooking chamber. The first liquid and the second liquid may be supplied to such a restricted area of the cooking chamber before reaching the directing plate. The nozzle may be arranged in a restricted or a specific area of the cooking chamber. The nozzle may be arranged in an upper part of the cooking chamber. By having the nozzle arranged between the upper wall of the cooking chamber and the directing plate, a more compact design of the arrangement for conveying liquid may be provided, thereby avoiding that the arrangement for conveying liquid may impair or affect some functionality of the oven, such as a cooking process.

According to some embodiments, an impact point of the directing plate may be arranged at a drop distance along the first direction relative to the nozzle. The drop distance may be greater than or equal to 5 mm and less than or equal to 30 mm.

The directing plate may have an impact point. The impact point may be a point on the directing plate in which the first direction and the directing plate intersect. The impact point may be a point, area or space of the directing plate on which the first liquid and/or second liquid supplied from the liquid supplying means, or the nozzle, may hit the directing plate. It is to be understood that a majority of the first liquid and/or second liquid supplied into the cooking chamber may hit the impact point of the directing plate. However, some part of the first liquid and/or the second liquid may splash outside of the impact point or the directing plate. The first liquid and/or the second liquid, at least a majority thereof, may thus hit or reach the impact point of the directing plate when being supplied through the nozzle. The drop distance may be defined as a distance between the impact point and the nozzle. The drop distance may be defined along the first direction. Arranging the impact point of the directing plate at a drop distance relative to the nozzle may be beneficial in order to achieve a desired direction of flow of the first liquid and/or the second liquid. The drop distance may improve the directing of the first liquid in the food preparation mode, and/or the directing of the second liquid in the washing mode. For example, in the washing mode, the spread and distribution of the second liquid towards the cooking chamber may be improved by arranging the impact point of the directing plate at a drop distance relative to the nozzle.

According to some embodiments, the directing plate may have a concave-shaped surface.

The directing plate may comprise two or more flat partial surfaces arranged to form a concave-shaped surface. The directing plate may be made by pressing process such that the directing plate comprises a concave-shaped surface. The directing plate may comprise a curved surface. In an example, the directing plate may be v-shaped. In an example, the directing plate may be shaped as a spoon. The directing plate may be made of a metal, such as steel.

According to some embodiments, the liquid supplying means may comprise a nozzle arranged in the oven cavity. The concave-shaped surface of the directing plate may face the nozzle.

The concave-shaped surface of the directing plate may be directed, or oriented, towards the nozzle. In an example, the nozzle may be arranged in the upper wall of the cooking chamber. The concave-shape surface of the directing plate may face the nozzle, and thus, the upper wall of the cooking chamber. The concave-shaped surface of the directing plate may improve and facilitate the directing of the first liquid in the food preparation mode, and/or the directing of the second liquid in the washing mode, when reaching the directing plate. For example, in the washing mode, the spread and distribution of the second liquid towards the cooking chamber may be improved by the concave-shaped surface of the directing plate. For example, in the food preparation mode, the concave-shaped surface may improve the directing of the first liquid towards the opening.

According to some embodiments, the liquid supplying means may be connected to a first conduit configured to convey the first liquid and a second conduit configured to convey the second liquid. The first conduit and the second conduit may be separate.

The oven may comprise the first conduit and/or the second conduit. The first conduit and/or the second conduit may be arranged outside the oven cavity. The first conduit and/or the second conduit may be a pipe or a tube suitable for conveying a liquid. The first conduit may be separately arranged from the second conduit. The first conduit may convey the first liquid to the liquid supplying means, e.g., to the nozzle, such that the first liquid may be supplied to the oven cavity. The second conduit may convey the second liquid to the liquid supplying means, e.g., to the nozzle, such that the second liquid may be supplied to the oven cavity. This may be beneficial since the first liquid and the second liquid may be utilized separately, or independently, and depending on the operating mode of the oven. In an example, in the food preparation mode, the first liquid may be supplied to the oven cavity via the first conduit, and therefore the first liquid may be used separately from the second liquid. In this way the first liquid may remain in a pure state and the risk of it being mixed or affected by the second liquid may be avoided. In an example, in the washing mode, the second liquid may be supplied to the oven cavity via the second conduit, and therefore the second liquid may be used separately from the first liquid.

According to some embodiments, the oven may comprise a drain conduit arranged at the bottom wall of the cooking chamber and configured to collect the second liquid. The drain conduit may be connected to the second conduit for recirculating the second liquid within the oven cavity.

The bottom wall of the cooking chamber may comprise the drain conduit. The second liquid which may be directed partly towards the heating chamber and partly towards the cooking chamber during the washing mode may be collected or accumulated in the drain conduit. The drain conduit may be connected to a tank configured to collect the second liquid. The drain conduit and/or the tank may be connected to the second conduit. By this, the second liquid may be recirculated within the oven cavity, e.g., during the washing mode. The recirculation of the second liquid may be performed automatically during the washing mode, e.g., it may be controlled by a control unit of the oven. In an example, the second conduit may be provided with, or connected to, a circulation pump configured to circulate the second liquid from the tank, and/or the drain conduit, to the oven cavity. In an example, the washing mode may comprise a start phase in which the second liquid may be prepared. A detergent may be placed inside, or provided to, the cooking chamber, e.g., by an operator of the oven or by a detergent supplying means comprised in the oven. In the start phase of the washing mode, the first liquid, which in this case may be water, may be supplied to the oven cavity, and thus to the cooking chamber, via the liquid supplying means, for dissolving the detergent. The mixture of water and detergent may be collected in the tank. The second liquid, i.e., a cleaning liquid comprising water and detergent, may then be recirculated by the second conduit and the circulation pump. By recirculating the second liquid within the oven cavity, the washing or cleaning of the oven cavity, during the washing mode, may be improved and made more efficient. This may also provide a more sustainable solution, e.g., environmentally, since the second liquid may be recycled. Furthermore, since the second conduit may be separate from the first conduit, the ability to control the flow of the second liquid, and the reutilisation of the second liquid, may be increased.

Further objectives of, features of, and advantages with the present disclosure will become apparent when studying the following detailed disclosure, the drawings, and the appended claims. Those skilled in the art realize that different features of the present disclosure, even if recited in different claims, can be combined in embodiments other than those described in the following.

### BRIEF DESCRIPTION OF THE DRAWINGS

Exemplifying embodiments will now be described in more detail, with reference to the following appended drawings:
Figure 1 schematically illustrates a perspective view of an oven in cross-section according to some embodiments of the present disclosure;
Figure 2 schematically illustrates a perspective view of an oven according to some embodiments of the present disclosure;
Figure 3A schematically illustrates a cross-section view of a part of an oven according to some embodiments of the present disclosure;
Figure 3B schematically illustrates a cross-section view of a part of an oven according to some embodiments of the present disclosure;
Figure 4 schematically illustrates an oven according to some embodiments of the present disclosure;
Figures 5A-5B schematically illustrate examples of a directing plate according to some embodiments of the present disclosure;
Figure 6 schematically illustrates a method according to the second aspect of the present disclosure.

### DETAILED DESCRIPTION

As illustrated in the figures, the size of the elements and regions may be exaggerated for illustrative purposes and, thus, are provided to illustrate the general structures of the embodiments. Like reference numerals refer to like elements throughout.

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

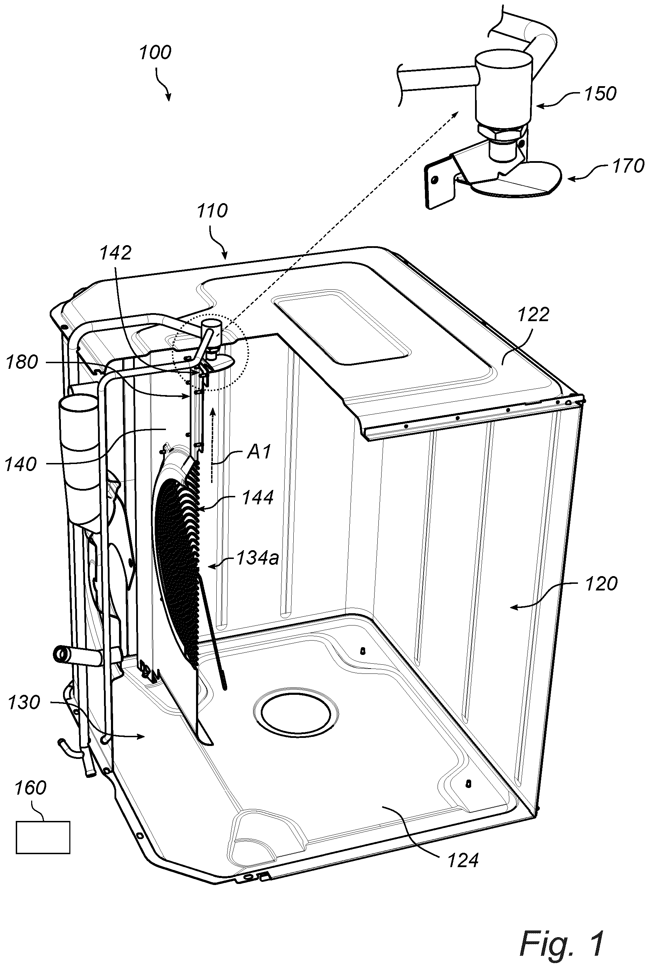

With reference to Fig. 1, an oven 100 according to some embodiments of the present disclosure is shown in perspective and cross-section view. The oven 100 comprises an oven cavity 110. The oven cavity 110 is shaped like a box as seen in Fig. 1. The oven cavity comprises a cooking chamber 120 and a heating chamber 130. The oven 100 comprises a partition wall 140 arranged to separate the cooking chamber 120 from the heating chamber 130. The partition wall 140 extends along a first axis A1 between an upper wall 122 of the cooking chamber 120 and a bottom wall 124 of the cooking chamber 120. The oven cavity 110, the cooking chamber 120, the heating chamber 130, and/or the partition wall 140 may preferably be made of metal, for example steel. The oven 100 may comprise an external casing (not shown) in which the oven cavity 110 is arranged. The cooking chamber 120 may be accessible, by an operator or user of the oven 100, via a door (not shown) arranged in the external casing. Foodstuff to be cooked may be placed in the cooking chamber 120. In an example, the cooking chamber 120 may comprise a plurality of trays or racks (not shown) wherein foodstuff may be placed for being cooked. The heating chamber 130 comprises at least one heating element (not shown) and a fan (now shown) configured to circulate air in the oven cavity 110. The partition wall 140 may be oriented vertically, or substantially vertically, when the oven 100 is in its operative position. Thus, in the operative position of the oven 100, the first axis A1 may align or be parallel to a vertical axis. The partition wall 140 comprises a suction area 134a from which air can enter a central region of the fan (not shown). This allows for a passage of air and/or liquid between the cooking chamber 120 and the heating chamber 130. As seen in Fig. 1, the suction area 134a is provided with a grating 144 for allowing the passage of air and of liquid. The oven 100 comprises an arrangement for conveying liquid within the oven cavity 110. As seen in Fig. 1, a magnified illustration of a part of the arrangement for conveying liquid is shown at the top right of Fig. 1, wherein the dotted circle indicates the part being magnified. The arrangement for conveying liquid comprises a liquid supplying means 150. The liquid supplying means 150 is configured to supply a first liquid and a second liquid to the oven cavity 110. The liquid supplying means may arranged in an upper part of the oven cavity 110. In Fig. 1, the liquid supplying means 150 is arranged in the upper part of the cooking chamber 120, more specifically, it is arranged in the upper wall 122 of the cooking chamber 120. However, the liquid supplying means 150 may be arranged differently. The liquid supplying means 150 may be configured to supply the first liquid and/or the second liquid to a restricted or a specific area of the oven cavity 110 and/or the cooking chamber 120. The first liquid and/or the second liquid may be supplied to such a restricted or a specific area before reaching a directing plate 170. The arrangement, and/or the oven 100, comprises a control unit 160. The control unit 160 is connected to the liquid supplying means 150, by cable or wirelessly, such that the control unit 160 control a flow rate of the first liquid and the second liquid. The arrangement comprises an opening 142 arranged in the partition wall 140. The opening 142 is configured to be in fluid communication with the heating chamber 130. By this, a fluid may flow from the opening 142 to the heating chamber 130. The arrangement may comprise a channel 180 configured to convey the first liquid and the second liquid from the opening 142 towards the heating chamber 130. The channel 180 may convey the first liquid and the second liquid from the opening 142 towards the suction area 134a of the fan. As seen in Fig. 1, the channel 180 is arranged along the partition wall 140, on the side of the partition wall 140 facing the heating chamber 130. The arrangement comprises the directing plate 170 fixedly arranged adjacent the opening 142. In Fig. 1, the directing plate 170 is arranged, or fastened, on the partition wall 140. However, the directing plate 170 may be attached differently, for example in the upper wall 122 of the cooking chamber 120 and/or the oven cavity 110. The directing plate 170 is configured to direct the first liquid and the second liquid being supplied to the oven cavity 110 and/or to the cooking chamber 120 by the liquid supplying means 150. Based on the flow rate of the first liquid and the second liquid, which are controlled by the control unit 160, the directing plate 170 is configured to direct the first liquid and the second liquid towards at least one of the cooking chamber 120 and the opening 142. Thus, the oven of the present disclosure allows for conveying or distributing the first liquid and/or the second liquid towards the cooking chamber 120 and toward the heating chamber 130 of the oven cavity 110, depending on the operating mode of the oven 100, by utilising the flow rate of the first liquid and/or the second liquid and the arrangement of the directing plate 170.

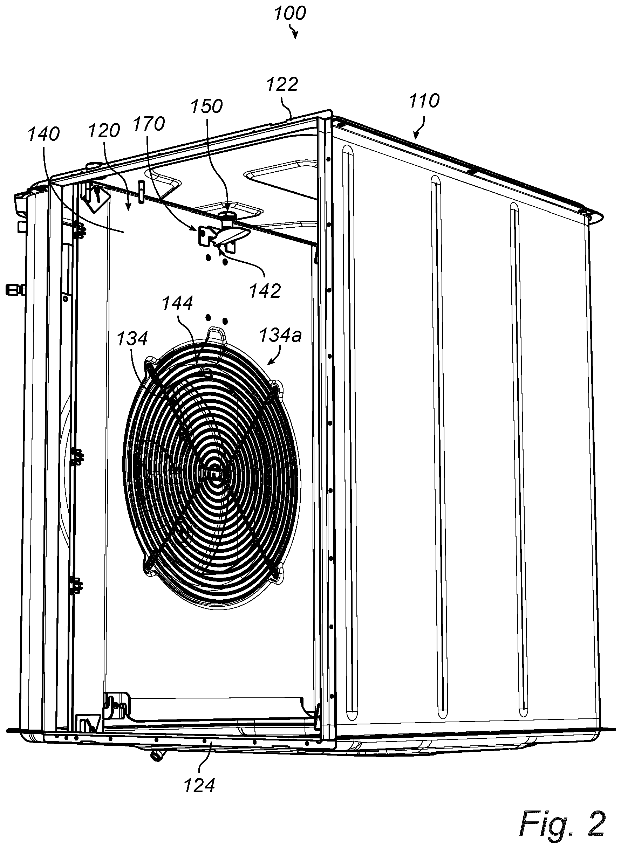

With reference to Fig. 2, an oven 100 according to some embodiments of the present disclosure is shown in perspective view. In Fig. 2, a front side of the oven 100 is shown from a different perspective compared to in Fig. 1. In Fig. 2, only the cooking chamber 120 is visible. The heating chamber (not shown) is arranged behind the partition wall 140 dividing the cooking chamber 120 from the heating chamber. In Fig. 2, the suction area 134a is arranged in the middle of the partition wall 140 and provided with the grating 144. The fan 134 of the heating chamber is arranged behind the grating 144. The suction area 134a faces a central region of the fan 134. In Fig. 2, the liquid supplying means 150 is arranged in an upper part of the oven cavity 110, more specifically, the upper wall 122 of the cooking chamber 120. The directing plate 170 and the opening 142 in the partition wall 140 may be arranged in relation to each other. In Fig. 2, the directing plate 170 is arranged near the opening 142 so as to allow the first liquid and the second liquid, supplied by the liquid supplying means 150 and directed by the directing plate 170, to enter the opening 142, depending on the operating mode of the oven 100.

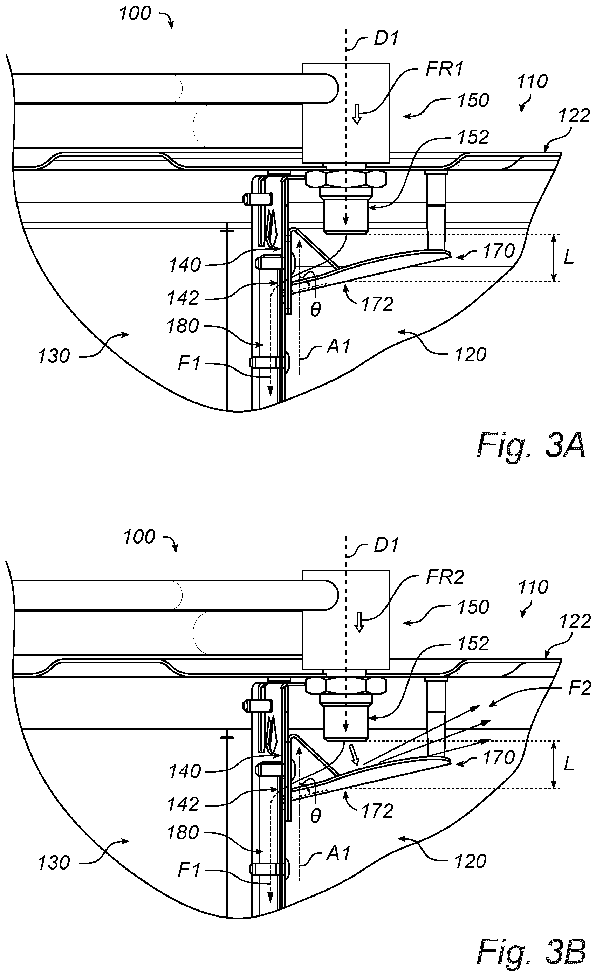

With reference to Figs. 3A and 3B, a cross-section view of a part of an oven 100 according to some embodiments of the present disclosure is shown. In Figs. 3A and 3B, an upper part of the oven 100 is shown, illustrating components of the arrangement for conveying liquid within the oven cavity 110 of the oven 100. As seen in Figs. 3A and 3B, the liquid supplying means 150 comprises a nozzle 152. The nozzle 152 is arranged in the oven cavity 110 and configured to supply a liquid to the oven cavity 110 in a first direction D1 as shown in Figs. 3A and 3B. In the example seen in Figs. 3A and 3B, the nozzle 152 is arranged in the cooking chamber 120. A liquid may be supplied to the cooking chamber 120, or to a restricted or specific area of the cooking chamber 120, through, or via, the nozzle 152 in the first direction D1. For example, the first liquid or the second liquid may be supplied along the first direction D1 before reaching and/or hitting the directing plate 170. The first direction D1 is parallel to the first axis A1 along which the partition wall 140 extends. In Figs. 3A and 3B, the first direction D1 is illustrated downwards. The nozzle 152 is arranged along the first direction D1. As shown in Figs. 3A and 3B, the nozzle 152 is arranged between the upper wall 122 of the cooking chamber 120 and the directing plate 170. The directing plate 170 is arranged below the nozzle 152 as seen in Figs. 3A and 3B. The directing plate 170 may be arranged in relation to the first direction D1, e.g., such that a liquid supplied via the nozzle 152 reaches or hits the directing plate 170. The directing plate 170 is fixedly arranged adjacent the opening 142, e.g., fastened in the partition wall 140. As seen in Figs. 3A and 3B, the arrangement for conveying liquid comprises a channel 180 configured to convey a liquid from the opening 142 towards the at least one heating element (not shown) and/or the fan (not shown) of the heating chamber 130. The channel 180 may convey a liquid from the opening 142 towards the suction area (not shown) of the fan. As shown in Figs. 3A and 3B, at least a part of the directing plate 170 extends from the partition wall 140 at an inclination angle θ relative to the first axis A1. The inclination angle θ is illustrated with an arrow from the first axis A1 to the directing plate 170 in Figs. 3A and 3B. The inclination angle θ may be defined between the first axis A1 and at least a part of the directing plate 170. In the example shown in Figs 3A and 3B, the directing plate 170 extends into the cooking chamber 120 at the inclination angle θ relative to the first axis A1. Preferably, the inclination angle θ may be greater than or equal to 60 degrees and less than or equal to 90 degrees, i.e., 60° ≤ θ ≤ 90°. An impact point 172 of the directing plate 170 is shown in Figs. 3A and 3B. The impact point 172 may be a point, an area or a region of the directing plate 170. The impact point 172 may be arranged along the first direction D1. When a liquid is supplied via the nozzle 152 by the liquid supplying means 150, the liquid may hit or reach the impact point 172 on the directing plate 170. For example, the nozzle 152 may supply the first liquid or the second liquid to the oven cavity 110, and/or to the cooking chamber 120, wherein the first liquid or the second liquid may hit the impact point 172. In Figs. 3A and 3B, the impact point 172 is arranged at a drop distance L along the first direction D1 relative to the nozzle 152. The drop distance L is defined between the impact point 172 and the nozzle 152. In the case where the impact point 172 is a region of the directing plate 170, the drop distance L may be defined, or measured, between a centre point of that region and the nozzle 152. Preferably, the drop distance L may be greater than or equal to 5 mm (millimetre) and less than or equal to 30 mm (millimetre), i.e. 5 mm ≤ L ≤ 30 mm.

With reference to Fig. 3A, a food preparation mode of the oven 100 will now be described. The food preparation mode of the oven 100 relates to an automatic process for preparing foodstuff placed in the cooking chamber 120. In the food preparation mode, the liquid supplying means 150 may be configured to supply the first liquid to the oven cavity 110, via the nozzle 152. In an example, if the nozzle 152 is arranged in the cooking chamber 120, the first liquid may be supplied to the cooking chamber 120 from the nozzle 152, before reaching the directing plate 170. The second liquid may not be used or supplied to the oven cavity 110 in the food preparation mode. In the food preparation mode, the first liquid has a first flow rate FR1 indicated with an arrow in Fig. 3A. The control unit (not shown) of the oven 100 is connected to the liquid supplying means 150 and controls the first flow rate FR1 of the first liquid. Thus, in the food preparation mode, the control unit is configured to control the first flow rate FR1 of the first fluid. In the food preparation mode, the directing plate 170 directs the first liquid towards the opening 142 based on the first flow rate FR1. Since the opening 142 is in fluid communication with the heating chamber 130, and/or the components of the heating chamber 130, the first liquid may reach the heating chamber 130 as it flows towards the opening 142. The first liquid flowing with the first flow rate FR1 provides a first flow F1 of liquid. The first flow F1 is illustrated with an arrow in Fig. 3A, starting from the nozzle 152, continuing through the opening 142 and is led via the channel 180 towards the heating chamber 130. Thus, during the food preparation mode, the first liquid may flow according to the first flow F1, based on the first flow rate FR1. The first flow rate FR1 may be less than 0.5 dm³ per minute. Preferably, the first flow rate FR1 may be less than or equal to 0.4 dm³ per minute and greater than or equal to 0.1 dm³ per minute, i.e., 0.1 dm³/minute ≤ FR1 ≤ 0.4 dm³/minute. In an example, in the food preparation mode, the first liquid may be supplied through the nozzle 152 along the first direction D1 with the first flow rate FR1, hit the impact point 172 of the directing plate 170, and then be directed by the directing plate 170 towards the opening 142. The inclination angle θ of the directing plate 170 may help to ensure that the first liquid is directed towards the opening 142 in a desired way during the food preparation mode.

In an example with reference to Fig. 3A, the food preparation mode will now be described. The first liquid may be water. The liquid supplying means 150 may supply the water into the oven cavity 110 via nozzle 152. The control unit (not shown) may control the first flow rate FR1 of the water. The directing plate 170 may direct the supplied water towards the opening 142 based on the first flow rate FR1. The water may be conveyed by the channel 180 towards a suction area (not shown) of the fan, i.e., towards the heating chamber 130. The water may thus flow according to the first flow F1. When the water reaches the suction area of the fan, the water may reach the fan (not shown) and/or at least one heating element (not shown) of the heating chamber 130. In the food preparation mode, the at least one heating element may be configured to operate at a temperature suitable for heating air for cooking and/or for vaporizing water for steam generation. In the food preparation mode, the fan may be configured to circulate air and/or fluid. The water may spread, e.g., by being sucked in by the fan, on the at least one heating element, thereby being vaporized and generating steam. The steam may be provided to the cooking chamber 120, e.g., via one or more gaps (not shown) provided between the partition wall 140 and the side walls of the oven cavity 110. The generated steam provided to the cooking chamber 120 may be used to cook foodstuff placed therein, for example for steaming food. The food preparation mode may thus relate to a steam generation function of the oven 100.

With reference to Fig. 3B, a washing mode of the oven 100 will now be described. The food preparation mode of the oven 100 relates to an automatic, or semi-automatic, process for washing the oven cavity, i.e., the cooking chamber 120 and the heating chamber 130. In the washing mode, the liquid supplying means 150 may be configured to supply the second liquid to the oven cavity 110, via the nozzle 152. In an example, if the nozzle 152 is arranged in the cooking chamber 120, the second liquid may be supplied to the cooking chamber 120 from the nozzle 152, before reaching the directing plate 170. In some examples of the washing process during the washing mode, the first liquid may be used and supplied to the oven cavity 110 by the liquid supplying means 150 and/or the nozzle 152. However, the first liquid and the second liquid may be supplied at different times, or during different parts, of the washing mode. In the washing mode, the second liquid has a second flow rate FR2 indicated with an arrow in Fig. 3B. The control unit (not shown) of the oven 100 is connected to the liquid supplying means 150 and controls the second flow rate FR2 of the second liquid. Thus, in the washing mode, the control unit is configured to control the second flow rate FR2 of the second fluid. In the washing mode, the directing plate 170 directs the second liquid partly towards the opening 142 and partly towards the cooking chamber 120 based on the second flow rate FR2. Since the opening 142 is in fluid communication with the heating chamber 130, and/or the components of the heating chamber 130, the second liquid may reach the heating chamber 130 as it flows towards the opening 142. Thus, in the washing mode, the second liquid reaches both the cooking chamber 120 and the heating chamber 130. The second liquid flowing with the second flow rate FR2 provides a first flow F1 of liquid and a second flow F2 of liquid. Thus, in the washing mode, the first flow F1 and the second flow F2 are provided. The first flow F1 is illustrated with an arrow in Fig. 3B, starting from the nozzle 152, continuing through the opening 142 and is led via the channel 180 towards the heating chamber 130. The second flow F2 is illustrated with multiple arrows in Fig. 3B, starting from the directing plate and spreading towards the cooking chamber 120. Thus, during the washing mode, the second liquid may flow according to the first flow F1 and the second flow F2, based on the second flow rate FR2. The second flow rate FR2 may be greater than 10 dm³ per minute. Preferably, the second flow rate FR2 may be greater than or equal to 15 dm³ per minute and less than or equal to 25 dm³ per minute, i.e., 15 dm³/minute ≤ FR2 ≤ 25 dm³/minute. In an example, in the washing mode, the second liquid may be supplied through the nozzle 152 along the first direction D1 with the second flow rate FR2, hit the impact point 172 of the directing plate 170, and then be directed by the directing plate 170 partly towards the opening 142 and partly towards the cooking chamber 120. The inclination angle θ of the directing plate 170 may help to ensure that the second liquid is directed partly towards the opening 142 and partly towards the cooking chamber 120 in a desired way during the washing mode. Especially, in the washing mode, the inclination of at least a part of the directing plate 170 may improve the spread of the second liquid into, or over, the cooking chamber 120.

In an example with reference to Fig. 3B, the washing mode will now be described. The second liquid may be a cleaning liquid comprising water mixed with a detergent or a cleaning agent. The liquid supplying means 150 may supply the cleaning liquid into the oven cavity 110 via nozzle 152. The control unit (not shown) may control the second flow rate FR2 of the cleaning liquid. The directing plate 170 may direct the supplied cleaning liquid partly towards the opening 142 and partly towards the cooking chamber 120 based on the second flow rate FR2. The cleaning liquid may thus be divided into the first flow F1 and the second flow F2. The first flow F1 of cleaning liquid may be conveyed by the channel 180 towards a suction area (not shown) of the fan, i.e., towards the heating chamber 130. When the cleaning liquid reaches the suction area of the fan, the cleaning liquid may reach the fan (not shown) and/or at least one heating element (not shown) of the heating chamber 130. In the washing mode, the at least one heating element may operate at a temperature suitable for the washing mode. The cleaning liquid may spread in the heating chamber 130, e.g., by the fan, such that the cleaning liquid may reach the entire heating chamber 130. The second flow F2 of cleaning liquid may be spread into, or over, the cooking chamber 120. The directing plate 170 may be formed such that the cleaning liquid reaches the entire cooking chamber 120. In this way, the cleaning liquid may reach the entire oven cavity, i.e., the heating chamber 130 and the cooking chamber 120 in order to thoroughly clean the two chambers in an efficient way.

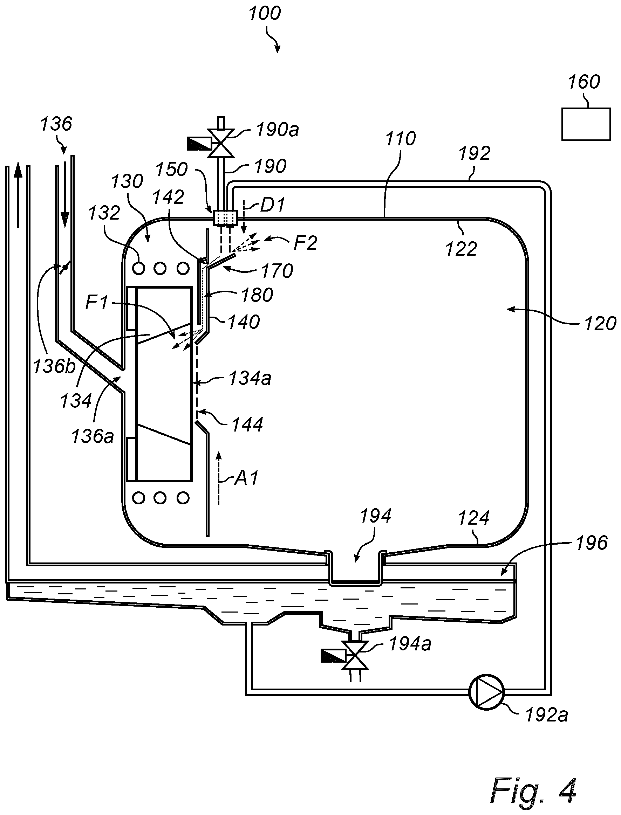

With reference to Fig. 4, an oven 100 according to some embodiments of the present disclosure is schematically illustrated. In Fig. 4, the oven cavity 110 comprising the cooking chamber 120 and the heating chamber 130 is shown. The control unit 160 of the oven 100, and/or of the arrangement for conveying liquid is seen in Fig. 4. The control unit 160 may be connected to the oven 100, by cable or wirelessly, and/or arranged in the oven 100. The control unit 160 may be connected, by cable or wirelessly, to different parts or components of the oven 100. The control unit 160 may control all or some of the functions of the oven 100. As seen in Fig. 4, and also shown in Figs. 1, 3A, and 3B, the oven comprises a partition wall 140 dividing the cooking chamber 120 and the heating chamber 130, and extending along an axis A1 between the upper wall 122 and the bottom wall 124. The heating chamber 130 comprises at least one heating element 132 and a fan 134. The at least one heating element 132 is configured to heat air and/or fluid, and the fan 134 is configured to circulate air and/or fluid through the cooking chamber 120 and the heating chamber 130. The at least one heating element 132 may be an electric heater, hot tubes wherein the hot fumes exiting a gas burner flows, a heat exchanger, etc. In Fig. 4, the partition wall 140 comprises a suction area 134a provided with a grating 144. The suction area 134a faces a central region of the fan 134. As shown in Fig. 4, the oven 100 comprises a ventilation pipe 136 in fluid communication with the cooking chamber 120 and configured to selectively taking air from the external environment into the cooking chamber 120. The ventilation pipe 136 comprises an outlet 136a provided at the heating chamber 130, more specifically, in proximity to the fan 134. The ventilation pipe 136 is provided with a controlled ventilation valve 136b for selectively closing the ventilation pipe 136. The ventilation valve 136b may be controlled by the control unit 160. The ventilation valve 136b may be controlled according to the operating mode of the oven 100. For example, during the food preparation mode, the ventilation valve 136b may be controlled in order to provide fresh air from the external environment into the heating chamber 130 for the steam generation process. As seen in Fig. 4, the oven 100 comprises a first conduit 190 configured to convey the first liquid and a second conduit 192 configured to convey the second liquid. The liquid supplying means 150 is connected to the first conduit 190 and to the second conduit 192. The first conduit 190 and the second conduit 192 are separate as seen in Fig. 4. The first conduit 190 is provided with a first valve 190a for controlling the flow of the first liquid. The control unit 160 may be connected to the first valve 190a and configured to control the first valve 190a in order to control the flow of the first liquid into the oven cavity 110. The first valve 190a may be controlled according to the operating mode of the oven 100. In Fig. 4, the oven 100 comprises a drain conduit 194 arranged at the bottom wall 124 of the cooking chamber 120. The bottom wall 124 may be, at least partly, sloped or inclined as seen in Fig. 4. The bottom wall 124 may be inclined towards the drain conduit 194. The drain conduit 194 is configured to collect liquid from the cooking chamber 120 and the heating chamber 130. The drain conduit 194 may collect liquid that has accumulated in the bottom wall 124 of the cooking chamber 120. The drain conduit 194 may collect the second liquid, e.g., in the washing mode. The drain conduit 194 is connected to a tank 196 as shown in Fig. 4. The liquid accumulated in the bottom of the cooking chamber 120 may be lead through the drain conduit 194 and collect in the tank 196. The drain conduit 194, and the tank 196, are connected to the second conduit 192 as seen in Fig. 4. By this, the second liquid may be recirculated in the oven cavity 110. In Fig. 4, the second conduit 192 is provided with a circulation pump 192a configured to circulate a liquid, such as the second liquid, within the oven 100. The circulation pump 192a may circulate a liquid from the tank 196, through the second conduit 192, and into the oven cavity 110, where the liquid may then reach the heating chamber 130 and/or the cooking chamber 120 by being directed by the directing plate 170. The control unit 160 may be connected to the circulation pump 192a and configured to control the circulation pump 192a. The circulation pump 192a may be controlled according to the operating mode of the oven 100. The circulation pump 192a may, at least partly, provide a flow rate of the second liquid, such as the second flow rate of the second liquid.

In an example with reference to Fig. 4, the food preparation mode will now be described. In the food preparation mode, the first liquid, being water, may be supplied to the oven cavity 110 via the first conduit 190, and then directed towards the heating chamber 130 by the directing plate 170 and via the opening 142. The control unit 160 may control the first flow rate of the first liquid, e.g., via the first valve 190a. Based on the first flow rate, the first liquid may be directed by the directing plate 170 towards the opening 142. Thereby, based on the first flow rate, the first liquid may flow according to the first flow F1. The first liquid may be lead via the channel 180 towards the suction area 134a of the fan 134. The fan 134 may be operated, e.g., by the control unit 160, to spread the first liquid towards the at least one heating element 132. The at least one heating element 132 may be operated at a temperature suitable for vaporizing water. The first liquid, i.e., the water, may be vaporized, and thus, steam may be generated. The generated steam may be provided into the cooking chamber 120 to be used for cooking, and/or steaming, foodstuff which may be placed therein. The fan 134 may push or circulate the generated steam into the cooking chamber 120, e.g., via one or more lateral gaps (not shown) provided between the partition wall 140 and the side walls of the oven cavity 110. By this, an improved and efficient steam generation function of the oven may be provided.

In an example with reference to Fig. 4, the washing mode will now be described. The washing mode may comprise a start phase in which the second liquid is prepared. In the start phase, a detergent or cleaning agent may be provided into the cooking chamber 120. For example, an operator of the oven 100 may place a detergent, e.g., a detergent tablet, in the cooking chamber 120 by accessing the cooking chamber 120 via a door (not shown) in the external casing (not shown) of the oven 100. For example, a detergent, e.g., a fluid detergent, may be provided to the cooking chamber 120 via a detergent supplying means (not shown) or in a detergent compartment (not shown), i.e., automatically. In the start phase, the first liquid, being water, may be supplied to the oven cavity 110 via the first conduit 190. The detergent provided in the cooking chamber 120 may be dissolved by the water, and thus, the second liquid, i.e., a cleaning liquid, is prepared. The second liquid is accumulated in the bottom wall 124 of the cooking chamber 120 and lead via the drain conduit 194 to the tank 196. In a washing phase of the washing mode, the second liquid, i.e., the cleaning liquid, may be recirculated into the oven cavity 110 and reach both the heating chamber 130 and the cooking chamber 120 by the directing plate 170. Thus, the washing phase of the washing mode may comprise controlling, e.g., by the control unit 160, the circulation pump 192a to recirculate the second liquid into the oven cavity 110. The control unit 160 may control the circulation pump 192a in order to provide the second flow rate of the second liquid. The second liquid may then flow from the tank 196, via the second conduit 192, and be supplied into the oven cavity 110 by the liquid supplying means 150. Based on the second flow rate, the directing plate 170 may direct the second liquid partly towards the opening 142 and partly towards the cooking chamber 120. Thereby, based on the second flow rate, the second liquid may flow according to the first flow F1 and the second flow F2, as seen in Fig. 4. By this, the second liquid, i.e., the cleaning liquid, may reach both the heating chamber 130 and the cooking chamber 120, thereby providing an improved and efficient cleaning of the entire oven cavity 110 in the washing mode. According to the first flow F1, the second liquid may be provided to the suction area 134a of the fan 134 and then spread in the heating chamber 130, i.e., spread over the fan 134, the at least one heating element 132 and the walls of the heating chamber 130. According to the second flow F2, the second liquid may be spread, or sprayed, as a result of the arrangement of the directing plate 170 and the second flow rate, over the walls of the cooking chamber 120. In this way, a thorough cleaning of the heating chamber 130 as well as the cooking chamber 120 may be achieved in the washing mode. The second liquid which has spread into the heating chamber 130 and the cooking chamber 120 may accumulate in the bottom wall 124 of the cooking chamber 120. For example, one or more gaps may be provided between the partition wall 140 and the bottom wall 124 in order for a liquid to flow from the heating chamber 130 to the cooking chamber 120. The accumulated second liquid may be lead to the tank 196 via the drain conduit 194. The second liquid may in this way be recirculated again. In the end of the washing phase of the washing mode, the second liquid may accumulate in the tank 196 and be discharged or drained from the tank 196 via a second valve 194a. The second valve 194a may be connected to, e.g., by cable or wirelessly, and controlled by the control unit 160.

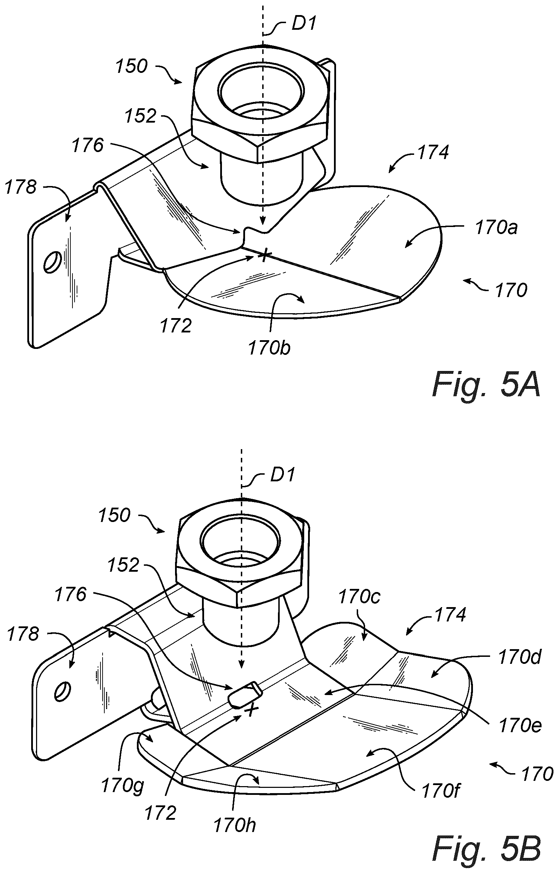

With reference to Fig. 5A, an example of a directing plate 170 according to some embodiments of the present disclosure is shown in perspective view. In Fig. 5A, the liquids supplying means 150 comprising the nozzle 152 is also shown. The directing plate 170 comprises a first surface 170a and a second surface 170b as seen in Fig. 5A. From a view along the first direction D1, the first surface 170a and the second surface 170a form a circular shape. Thus, in Fig. 5A, the directing plate 170 is circular. As seen in Fig. 5A, in a horizontal plane, the directing plate 170 is circular, i.e., when viewed from above or below. The diameter of the directing plate 170, i.e., the diameter of the first surface 170a and the second surface 170b combined, may be greater than or equal to 30mm and less than or equal to 70 mm. The first surface 170a and the second surface 170b may be inclined in relation to each other. As seen in Fig. 5A, in a vertical plane, the directing plate 170 has a v-shape, i.e., when viewed from the front. The first surface 170a and the second surface 170b forms a concave-shaped surface 174. The concave-shaped surface 174 of the directing plate 170 faces the nozzle 152 as seen in Fig. 5A. This may also be the case when the directing plate 170 is arranged in an oven, in the oven cavity and/or in the cooking chamber of an oven. The first surface 170a and the second surface 170b being inclined in relation to each other, and thus creating the v-shape and/or the concave-shape surface 174, provides an improved effect of the directing plate 170. By this, the directing plate 170 may direct and/or spread a liquid in an improved and more efficient. A first angle (not shown) may be defined between the first surface 170a and the second surface 170b on the side of the directing plate 170 having the concave-shaped surface 174. The first angle may be greater than or equal to 120 degrees (°) and less than or equal to 180 degrees (°). In Fig. 5A, the impact point 172 of the directing plate 170 is marked with a cross. The impact point 172 may be the point of the directing plate 170 where the first direction D1 and the directing plate 170 intersect. As seen in Fig 5A, the directing plate may comprise a plate hole 176. The plate hole 176 may be in fluid communication with the opening (not shown) of the partition wall (not shown) such that a liquid may flow, and/or be directed, from the directing plate 170 towards the opening. The directing plate 170 may comprise, or be connected to, a plate fastening means 178. The plate fastening means 178 may allow for the directing plate 170 to be fastened. The plate fastening means 178 may be configured to be fastened to, e.g., the partition wall, e.g., by using screws or bolts. The directing plate 170, or parts of the directing plate 170, such as the first surface 170a and the second surface 170b, may be made by a pressing process.

With reference to Fig 5B, an example of a directing plate 170 according to some embodiments of the present disclosure is shown in perspective view. In Fig. 5B, like in Fig. 5A, the liquids supplying means 150 comprising the nozzle 152 is also shown. The directing plate 170 comprises six surfaces, a first side surface 170c, a second side surface 170d, a rear surface 170e, a front surface 170f, a third side surface 170g, and a fourth side surface 170h, as seen in Fig. 5B. The six surfaces, 170c, 170d, 170e, 170f, 170g, 170h, form a spoon-shape. A concave-shaped surface 174 is formed by the six surfaces 170c, 170d, 170e, 170f, 170g, 170h. The concave-shaped surface 174 of the directing plate 170 faces the nozzle 152 as seen in Fig. 5B. This may also be the case when the directing plate 170 is arranged in an oven, in the oven cavity and/or in the cooking chamber of an oven. The spoon-shape and/or the concave-shaped surface 174 formed by the six surfaces 170c, 170d, 170e, 170f, 170g, 170h may provide an improved directing plate 170. The directing plate 170 may direct and/or spread a liquid in a more efficient way. The six surfaces 170c, 170d, 170e, 170f, 170g, 170h may each have a different inclination. In a horizontal plane, i.e., when viewing from above or below, the directing plate 170 seen in Fig. 5B may have a width greater than or equal to 30 mm and less than or equal to 90 mm, and a depth greater than or equal to 30 mm and less than or equal to 80 mm. A second angle (not shown) may be defined on the side of the directing plate 170 having the concave-shaped surface 174 in Fig 5B. The second angle may be defined between the first side surface 170c and the third side surface 170g, and/or between the second side surface 170d and the fourth side surface 170h. The second angle may be greater than or equal to 120 degrees (°) and less than or equal to 180 degrees (°). In Fig. 5B, like in Fig 5A, the impact point 172 of the directing plate 170 is marked with a cross and the plate hole 176 and the plate fastening means 178 is shown.

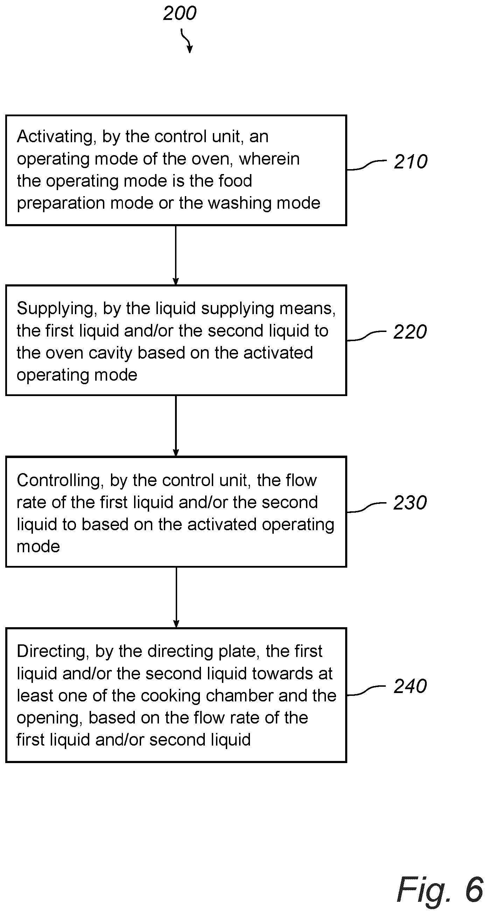

With reference to Fig. 6, a method 200 according to the second aspect of the present disclosure is schematically illustrated. There is provided a method 200 for operating an oven according to the first aspect of the present disclosure. The method 200 comprises activating 210, by the control unit, an operating mode of the oven. The operating mode of the oven is the food preparation mode or the washing mode. The operating mode of the oven may be selected by an operator of the oven. In an example, the operator may select the food preparation mode or the washing mode via a user interface comprised in the oven. The user interface may be arranged on or integrated in the external casing of the oven to be accessible for the operator. The method 200 comprises supplying 220, by the liquid supplying means, the first liquid and/or the second liquid to the oven cavity based on the activated operating mode. The first liquid and the second liquid may be supplied simultaneously or one at a time based on the operating mode. For example, in the food preparation mode, only the first liquid may be supplied. For example, in the washing mode, the first liquid may be supplied in a start phase of the washing mode and the second liquid may be supplied in the washing phase of the washing mode, and thus, the first liquid and the second liquid are supplied one at a time. The step of supplying 220, by the liquid supplying means, the first liquid and/or the second liquid to the oven cavity may comprise controlling, by the control unit, the flow of the first liquid and/or the flow of the second liquid to the liquid supplying means. The method 200 comprises controlling 230, by the control unit, the flow rate of the first liquid and/or the second liquid based on the activated operating mode. The method 200 comprises directing 240, by the directing plate, the first liquid and/or the second liquid towards at least one of the cooking chamber and the opening, based on the flow rate of the first liquid and/or the second liquid.

Additionally, variations to the disclosed examples can be understood and effected by the skilled person in practicing the claimed invention, from a study of the drawings, the disclosure, and the appended claims. The mere fact that certain measures are recited in mutually different dependent claims does not indicate that a combination of these measures cannot be used to advantage.

A feature described in relation to one aspect may also be incorporated in other aspects, and the advantage of the feature is applicable to all aspects in which it is incorporated. Other objectives, features, and advantages of the present inventive concept will appear from the detailed disclosure, from the attached claims as well as from the drawings.

Generally, all terms used in the claims are to be interpreted according to their ordinary meaning in the technical field, unless explicitly defined otherwise herein. In the claims, the word "comprising" does not exclude other elements. Further, the use of terms "first", "second", and "third", and the like, herein do not denote any order, quantity, or importance, but rather are used to distinguish one element from another. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

## Claims

1. An oven (100) configured for operating in a food preparation mode and a washing mode, the oven comprising:
an oven cavity (110) comprising a cooking chamber (120) and a heating chamber (130) comprising at least one heating element (132) and a fan (134) configured to circulate air in the oven cavity,
a partition wall (140) arranged to separate the cooking chamber from the heating chamber, wherein the partition wall extends along a first axis (A1) between an upper wall (122) of the cooking chamber and a bottom wall (124) of the cooking chamber, and
an arrangement for conveying liquid within the oven cavity, the arrangement comprising:
a liquid supplying means (150) configured to supply a first liquid and a second liquid to the oven cavity;
a control unit (160) connected to the liquid supplying means and configured to control a flow rate of the first liquid and the second liquid;
an opening (142) arranged in the partition wall and configured to be in fluid communication with the heating chamber; and
a directing plate (170) fixedly arranged adjacent the opening, wherein the directing plate is configured to, based on the flow rate of the first liquid and second liquid, direct the first liquid and the second liquid towards at least one of the cooking chamber and the opening.

2. The oven according to claim 1, wherein, in the food preparation mode, the control unit is configured to control a first flow rate of the first liquid, and the directing plate is configured to, based on the first flow rate, direct the first liquid towards the opening.

3. The oven according to claim 2, wherein the first flow rate is less than or equal to 0.5 dm³ per minute.

4. The oven according to any one of the preceding claims, wherein, in the washing mode, the control unit is configured to control a second flow rate of the second liquid, and the directing plate is configured to, based on the second flow rate, direct the second liquid partly towards the opening and partly towards the cooking chamber.

5. The oven according to claim 4, wherein the second flow rate is greater than or equal to 10 dm³ per minute.

6. The oven according to any one of the preceding claims, wherein the arrangement comprises a channel (180) configured to convey the first liquid and the second liquid from the opening towards the at least one heating element and/or the fan of the heating chamber.

7. The oven according to any one of the preceding claims, wherein at least a part of the directing plate extends into the cooking chamber at an inclination angle (θ) relative to the first axis, and wherein the inclination angle is greater than or equal to 60 degrees and less than or equal to 90 degrees.

8. The oven according to any one of the preceding claims, wherein the liquid supplying means comprises a nozzle (152) arranged in the oven cavity and configured to supply the first liquid and the second liquid to the oven cavity in a first direction (D1) parallel to the first axis.

9. The oven according to claim 8, wherein the nozzle is arranged in the cooking chamber between the upper wall of the cooking chamber and the directing plate, and arranged along the first direction.

10. The oven according to claim 8 or 9, wherein an impact point (172) of the directing plate is arranged at a drop distance (L) along the first direction relative to the nozzle, and wherein the drop distance is greater than or equal to 5 mm and less than or equal to 30 mm.

11. The oven according to any one of the preceding claims, wherein the directing plate has a concave-shaped surface (174).

12. The oven according to claim 11, wherein the liquid supplying means comprises a nozzle (152) arranged in the oven cavity, and wherein the concave-shaped surface of the directing plate is facing the nozzle.

13. The oven according to any one of the preceding claims, wherein the liquid supplying means is connected to a first conduit (190) configured to convey the first liquid and a second conduit (192) configured to convey the second liquid, and wherein the first conduit and the second conduit are separate.

14. The oven according to claim 13, wherein the oven comprises a drain conduit (194) arranged at the bottom wall of the cooking chamber and configured to collect the second liquid, and wherein the drain conduit is connected to the second conduit for recirculating the second liquid within the oven cavity.

15. A method (200) for operating an oven according to any one of claims 1-14, the method comprising:
activating (210), by the control unit, an operating mode of the oven, wherein the operating mode is the food preparation mode or the washing mode;
supplying (220), by the liquid supplying means, the first liquid and/or the second liquid to the oven cavity based on the activated operating mode;
controlling (230), by the control unit, the flow rate of the first liquid and/or the second liquid based on the activated operating mode;
directing (240), by the directing plate, the first liquid and/or the second liquid towards at least one of the cooking chamber and the opening, based on the flow rate of the first liquid and/or the second liquid.
